# EUROPEAN PATENT SPECIFICATION

(11) **EP 1 246 528 B1**
(45) Date of publication and mention of the grant of the patent: **02.01.2004**
(21) Application number: 01906392.4
(22) Date of filing: 15.01.2001
(51) Int. Cl.: A01N 25/18

(54) **SPRAYABLE COMPOSITION FOR INSECT CONTROL**
SPRITZBARE ZUSAMMENSETZUNG ZUR INSEKTENBEKÄMPFUNG
COMPOSITION VAPORISABLE POUR LUTTER CONTRE LES INSECTES

(30) Priority: 14.01.2000 EP 00200140
(43) Date of publication of application: 09.10.2002
(73) Proprietor: Nederlandse Organisatie voor Toegepast-Natuurwetenschappelijk Onderzoek TNO, 2628 VK Delft (NL)
(72) Inventor: DE VLIEGER, Jan, Jacobus, NL-5629 JZ Eindhoven (NL)
(74) Representative: Prins, Adrianus Willem
(86) International application number: PCT/NL2001/000023
(87) International publication number: WO 2001/050857

(56) References cited:
- GB-A- 2 166 974
- US-A- 6 001 346

## Description

The present invention relates to the production and use of a composition suitable for controlled release of an insect repelling or insect attracting agent or an other active agent, which composition can be applied using conventional spraying equipment.

The development of a biodegradable carrier material for pheromones was studied by Atterholt, Delwiche, Rice and Krochta, *J. Agric. Food Chem. 46*, **1998,** 4429-4434. They describe compositions containing a biopolymer (starch, whey protein, soy protein), a pheromone, an emulsifier and a plasticiser, from which films were made by casting. Such compositions are unsuitable for spraying with water. In US 6,001,346, the same authors describe an emulsion obtained by mixing a pheromone (1.5-4%), an emulsifier (0.4-4%) and water (57-60%) into molten paraffin wax (30-40%). The emulsion is spread on trees using a paint marking gun. Such emulsions cannot be mixed with water at ambient temperature, and they cannot be sprayed with conventional spraying nozzles.

WO 98/45036 discloses a dispersion of microcapsules containing a pheromone in a polyurea/polyurethane shell obtained by in situ polymerisation. As a result of the polymerisation process, the microcapsules have a porous wall, which makes them less suitable for controlled release of the pheromone. Moreover, the dispersion is not biodegradable.

Biodegradable non-aqueous compositions having the form of blocks, spheres or the like, for sustained release of pesticides, are disclosed in WO 95/34200. The compositions contain the active ingredient in a mixture of a wax and a slightly water-soluble waxy substance such as stearic acid and further components such as stabilisers. They are not intended for spraying and they are unsuitable for release of the active ingredient by vaporisation.

There is a need for providing compositions releasing an active agent, such as an insect repellent, at a controlled rate into the air by vaporisation, which composition should be applicable by simple spraying, e.g. from an aircraft, optionally after dilution with water. Thus, the invention pertains to a sprayable composition containing at least an active substance, a waxy substance and a primary stabiliser in an aqueous carrier, as defined in the appending claims.

The compositions according to the invention are in particular of the type of suspension concentrates, i.e. stable suspensions of active ingredients in a fluid intended for dilution in water before use. Such suspension concentrates have grown rapidly in popularity because of several significant benefits such as absence of dust, ease of use and effectiveness when compared with other conventional formulation types, such as emulsifiable concentrates and wettable powders. The suspended active ingredient must be insoluble in, and insensitive to, the dispersing medium, usually water, sometimes an aliphatic or an aromatic solvent. Dispersants, which are anionic, non-ionic or polymeric in nature, stabilise the particles in the dispersing medium. Suspension concentrates are essentially suspensions of particles in liquids. Particles account for 10-40%, surfactant 3-8% and carrier liquid (oil or water) 35-65% by weight. Viscosity should roughly equal the setting rate of the particles. This is achieved by the use of dispersants i.e. colloidal clays, synthetic polymers etc.

In a liquid formulation the active ingredient is carried in a liquid, normally oil or water. Addition of surfactant or oil and emulsifier to water, or use of pure oil, results in drops of more even size than those of water do alone, with consequently better controlled spray. Oil is preferred for ultra low-volume sprays (ULV); water is normally used as the diluent at higher volumes. The volume application rates of liquid formulations are classified as follows:

| | 1/ha |
|---|---|
| High volume (HV) | > 600 |
| Medium volume (MV) | 200-600 |
| Low volume (LV) | 50-200 |
| Very low volume (VLV) | 5- 50 |
| Ultra low volume (ULV) | < 5 |

Reduction of volume increases the need to optimise spray droplet size to maximise coverage of the target. Droplet size ranges for optimum application of foliage is 40-100 µm. Coverage is influenced by droplet size, impaction and retention. Drop sizes can be divided into two classes: small drops (<100-150µm) and large drops (>150µm). The small drops are primarily transported on turbulent eddies and therefore penetrate through foliage canopies. A spray cloud normally contains a range of droplets. The final size of the droplet reaching the target depends on the amount of evaporation of the formulation itself. The general characteristics of evaporation of water from water based droplets have been fairly well described by a theoretical model. Oil evaporates much less than water as a result of different vapour pressure and viscosity. Also evaporation of formulation itself increases as droplet size decreases due to increasing surface to volume ratios. Oil carriers are most used for ULV sprays. If water is used, especially with small droplets, an anti-evaporant or humectant is used. Anti-evaporants may form a film at the droplet surface to reduce evaporation: often these are water-soluble polymers.

The active substance contained in the sprayable composition according to the invention is an agriculturally or horticulturally interesting active substance such as semiochemicals (including pheromones and attractants), repellents, pesticides, fragrances, perfumes, and other volatile compounds. The active substances should have a sufficient volatility for release form the composition by vaporisation. In particular, they have a boiling point (at atmospheric conditions) between 40°C and 340°C. Especially interesting active substances are pheromones and repellents. Examples of pheromones are C₁₀-C₁₈ alkanols and alkenols and their lower fatty esters, such as Z11-tetradecenyl acetate and Z11-hexadecenyl acetate. Examples of repellents are linalool, terpineol, fenchone, carvone and other terpenoids, hydroxy- and oxo-alkenoic acids, salicylic aldehyde, allyl sulphide, allicine and the like.

The non-phytotoxic waxy substance which is used as a carrier material for the active substance, should preferably be a biodegradable non-water-miscible substance having a melting point below 150°C, e.g. a melting point between 30°C and 120°C. It should preferably have a boiling point above the boiling point of the active substance, in particular a boiling point (at atmospheric pressure) of above 200°C, especially above 300°C, and preferably be miscible with the active substance. The waxy substance is preferably a hydrophobic substance, and its solubility in water should preferably be no more than 1% at room temperature (20°C). The waxy substance should have no tendency to form micelles. It is advantageous when the waxy substance has at least one polar group, so as to allow some affinity for water. However, fully apolar waxes can also be used, although they may require the use of suitable emulsifiers, such as metal salts of water-insoluble fatty acids.

The waxy substance may be selected from biodegradable waxes, such as bees wax, carnauba wax and the like, candelilla wax (hydrocarbon wax), montan wax, shellac and similar waxes, saturated or unsaturated fatty acids having at least 8 carbon atoms, preferably at least 12 carbon atoms, such as lauric, palmitic, oleic or stearic acid, fatty acid amides and esters, hydroxylic fatty acid esters, such as hydroxyethyl or hydroxypropyl fatty acid esters, fatty alcohols having at least 10 carbon atoms, and low molecular weight polyesters such as polyalkylene succinates with a molecular weight of between 500 and 5000. Other suitable waxy substances are described in WO 95/34200. The waxy substance can be another substance than a wax, but it should be largely hydrophobic and viscous at temperatures below 120°C. Mixtures of waxy substances may also be used, such mixtures may include analogous compounds having a boiling point or melting point outside the ranges described above, as long as the mixture has the appropriate values. The amount of active agent can be between 1 and 30 %, especially between 5 and 20 %, by weight of the waxy substance.

The aqueous solvent to be used in the sprayable composition is preferably water or a mixture of water and an alcohol, glycol, ketone, or other water-miscible solvent. Preferably, the water content of such mixture is at least 50%. The sprayable composition is especially a suspension concentrate, i.e. a concentrated suspension of the waxy substance, the active substance and the stabilisers in the aqueous solvent, and can be diluted to the final use concentration by simple mixing of water.

The primary stabiliser is used to regulate the particle size of the aqueous concentrate and to allow the preparation of a stable suspension of the active substance contained in the waxy substance, with particles of at least 10 µm, up to 500 µm, preferably from 20 to 300 µm, more preferably at least 50 µm, up to 200 µm. The primary stabiliser is selected from hydroxylic and/or ethoxylated polymers.

Suitable examples are ethylene oxide and propylene oxide copolymer, polyalcohols, including starch, maltodextrin and other soluble carbohydrates or their ethers or esters, cellulose ethers, gelatin, polyacrylic acid and salts and partial esters thereof and the like. Particularly preferred primary stabilisers are polyvinyl alcohols and copolymers thereof, such as partly hydrolysed polyvinyl acetate, in particular a PVA having a degree of hydrolysis between 75 and 95%. The primary stabiliser may be used at a level between 0.1% and 15% of the aqueous solution, especially between 0.5% and 12%.

The composition (suspension concentrate) may further comprise a binder or sticker, for further stabilising the dispersion and for improving the adhesion of the sprayed dispersion. The binder is preferably a polysaccharide, such as an alginate, cellulose derivative (acetate, alkyl, carboxymethyl, hydroxyalkyl), starch or starch derivative, dextrin, gum (arabic, guar, locust bean, tragacanth, carrageenan, and the like), sucrose, etc. The binder may also be a non-carbohydrate, water-soluble polymer such as polyvinyl pyrrolidone, or especially a polymer containing acid groups such as polyacrylic acid or polymethacrylic acid, in acid and/or salt form, or mixtures of such polymers. The (meth)acrylate-type binders were found to be very suitable for avoiding foaming or transport problems occasionally occurring when the concentrates of the invention have to be pumped through tubings and the like. The binder may be used at a level of between 0.1 and 5% with respect to the weight of the aqueous solvent.

The composition may further contain a secondary stabiliser for increasing the long-term stability and the adhesion of the dispersion, which may be a member of the same groups of substances as those forming the primary stabilisers. A very useful secondary stabiliser is a polyvinyl alcohol having a degree of hydrolysis (of the acetate) of between 90% and 100%, such as PVA 20-98). The secondary stabiliser may be used at a level of between 0.05 and 5% with respect to the weight of the aqueous solvent.

The composition may further contain conventional antioxidants and/or UV absorbers, e.g. at levels of between 0.1% and 2.5% each. Examples of suitable antioxidants are hindered phenols such as pentaerythritol tetrakis[3-(3,5-di-tert-butyl-4-hydroxyphenyl)propionate] (Irganox 1010), 2,6-di-tert-butyl-p-cresol (BHT), ionol, etc. Examples of suitable UV absorbers are substituted benzophenones e.g. 2-hydroxy-4-methoxybenzophenone, substituted benzotriazoles and substituted benzimidazoles. The total solids content of the final dispersion should preferably be between about 5 and 25 % by weight.

The composition can also contain an ionic emulsifier, in particular when using highly apolar waxy substances. Suitable ionic emulsifiers include metal salts, especially alkali metal salts of water-insoluble alkanecarboxylic acids (fatty acids), alkanesulphonic acids, monoalkyl sulphates, alkylphosphonic acids and mono- and di-alkyl phosphates, and the alkylaryl analogues of these compounds. The hydrocarbon part of such acids preferably comprises at least 10, most preferably at least 12 carbon atoms. Examples includes sodium dodecyl sulphate, potassium palmitate, sodium stearate, lecithin and the like. The amounts can be e.g. 0.5-5% by weight with respect to the waxy substance.

Silicone surfactants can be useful as binders where wetting or better binding is required. The most common are polysiloxane-polyether copolymers (Trade names are Tegoplant from Goldschmidt and Silwet from Union Carbide).

The composition according to the invention may be prepared by a process which comprises the steps of:
(a) dissolving an active ingredient in a non-phytotoxic waxy substance to obtain a solution;
(b) dispersing the solution obtained in (a) in an aqueous solvent containing a primary stabiliser selected from hydroxylic and/or ethoxylated polymers to obtain a dispersion of particles of an average particle size between 10 and 500 µm; in particular having an average between 50 and 200 µm;
(c) adding a binder, and optionally diluting the dispersion obtained in (b); and adding optional further components before or after any of these steps.

In step (a) the active substance may be dissolved in said waxy substance in a concentration of between 5 and 30% by weight, together with the optional UV-absorber, antioxidant and the like. The dispersing step (b) may be carried out at a temperature above the melting temperature of said waxy substance, for example at 40-100°C, depending on the specific waxy substance(s) used, using an amount of between 20 and 300 g, especially between 50 and 200 g of waxy substance solution per 1 of aqueous medium. The particle size may be determined by the speed or force of stirring applied in this step. For common types of mixers, a rotor speed of at least 300 rpm, especially at least about 600 rpm is preferred. The dispersion is preferably cooled thereafter and step (c) may e.g. be carried out at a temperature below 30°C.

The composition can be applied in the target environment, such as trees, plants, fields etc. by spraying, e.g. using an aircraft or a wheeled vehicle having spraying facilities or a man-bom spraying tank. The application dosage may be between 5 and 200 g of active substance per ha. Dosage of the aqueous dispersion can be in the range of e.g. 5-1000 1/ha. The dispersion, once applied in the target environment, allows a long-term steady release of the active substance, usually at a release rate between zero order (constant amount per unit time) and first order (depending on remaining amount), of more than 60 days.

### Example 1

10 g linalool, 1 g of antioxidant (Irganox 1010) and 1 g of UV absorber (2-hydroxy-4-methoxybenzophenone) are dissolved in 88 g of molten stearic acid at a temperature of 90°C. This solution is added to 710 ml of a 0.67% (w/w) solution of polyvinyl alcohol, copolymer with polyvinyl acetate (Mowiol 18-88: 88% OH and 12% OAc) at 80°C with vigorous stirring (rotor speed 1500 rpm). After stirring for 15 min., the mixture is cooled to ambient temperature. 47.5 ml of a 10% solution of polyvinyl alcohol (Mowiol 20-98) and 142.5 ml of 2.5 solution of sodium alginate are added to the aqueous dispersion with stirring. The dispersion is now ready for spraying, if desired after further dilution.

### Example 2

14.5 g linalool, 1 g of antioxidant (Irganox 1010) and 1 g of UV absorber (2-hydroxy-4-methoxybenzophenone) are dissolved in 106 g of candelilla wax at a temperature of 90°C. This solution is added to 844 ml of a 0.7% (w/w) solution of polyvinyl alcohol, copolymer with polyvinyl acetate (Mowiol 18-88: 88% OH and 12% OAc), to which 2.1 g of sodium stearate is added at 80°C with vigorous stirring (rotor speed 600 rpm) resulting in a concentrated suspension. After stirring for 15 min., the mixture is cooled to ambient temperature. 182 g of a 2.5% solution of sodium alginate and 120 g of a 5% solution of polyvinyl alcohol (Mowiol 18-88) are then added to the aqueous dispersion with stirring. The dispersion is now ready for spraying, if desired after further dilution.

### Example 3

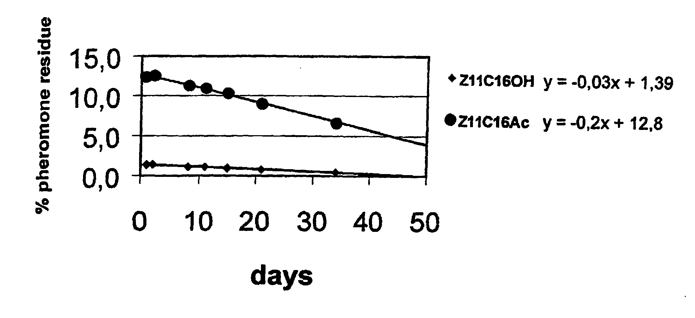

13.5 g (Z)-11-hexadecenyl acetate and 1.5 g (Z)-11-hexadecen-1-ol, 1 g of antioxidant (Irganox 1010) and 1 g of UV absorber (2- hydroxy-4-methoxybenzophenone) are dissolved in 84 g of molten stearic acid at a temperature of 90°C. This solution is added to 825 ml of a 0.3% (w/w) solution of polyvinyl alcohol, copolymer with polyvinyl acetate (Mowiol 18-88: 88% OH and 12% OAc) at 80°C with vigorous stirring (rotor speed 750 rpm). After stirring for 15 min., the mixture is rapidly cooled to a temperature of 20°C and 28 g of a 15% solution of Glaskol KA 21 (methacrylic acid polymer) is added to the aqueous dispersion with stirring. The dispersion is now ready for spraying, if desired after further dilution. The release is shown in figure 1.

## Claims

1. A water-dilutable sprayable composition, suitable for releasing an active substance by vaporisation after spraying of the composition in a target environment, comprising a suspension of particles of between 10 and 500 µm of the active substance and a non-phytotoxic waxy substance in an aqueous solvent containing a primary stabiliser selected from hydroxylic and/or ethoxylated polymers.

2. A composition according to claim 1, in which said active substance is selected from semiochemicals, repellents, pesticides, fragrances, perfumes, and other volatile compounds.

3. A composition according to claim 1 or 2, in which said non-phytotoxic waxy substance has a melting point below 150°C and a boiling point above the boiling point of said active substance.

4. A composition according to any one of claims 1-3, in which said non-phytotoxic waxy substance is selected from biodegradable waxes, fatty acids, fatty acid amides, hydroxylic fatty acid esters, fatty alcohols, and low molecular weight polyesters.

5. A composition according to any one of claims 1-4, in which said primary stabiliser comprises polyvinyl alcohol.

6. A composition according to any one of claims 1-5, in which said dispersion further comprises a binder, preferably a polysaccharide or a polymeric acid.

7. A composition according to any one claims 1-6, in which said dispersion further comprises an antioxidant and/or a UV absorber.

8. A composition according to any one of claims 1-7, in which said active substance is dissolved in said non-phytotoxic waxy substance in a concentration of between 5 and 20% by weight.

9. A composition according to any one of claims 1-8, which is water-miscible at a temperature of 25°C.

10. A composition according to any one of claims 1-9, in which said non-phytotoxic waxy substance is a wax not containing polar groups, and the composition further comprises a polar emulsifier, in particular a metal salt of a water-insoluble fatty acid.

11. A process for producing a sprayable composition suitable for releasing an active substance, comprising the steps of:
(a) dissolving an active ingredient in a non-phytotoxic waxy substance to obtain a solution;
(b) dispersing the solution obtained in (a) in an aqueous solvent containing a primary stabiliser selected from hydroxylic and/or ethoxylated polymers to obtain a dispersion of particles with an average particle size of at least 10 µm;
(c) adding a binder, and optionally diluting the dispesion obtained in (b).

12. A process according to claim 11, in which dispersion step (b) is carried out at a temperature above the melting temperature of said non-phytotoxic waxy substance, and said addition step (c) is carried at a temperature below 30°C.

13. A method of controlling plague organisms, comprising spraying a composition according to any one of claims 1-9 into the environment of said plague organism.

## Patentansprüche

1. Wasserverdünnbare, sprühbare Zusammensetzung, die zur Freisetzung eines Wirkstoffs durch Verdampfung nach Versprühen der Zusammensetzung in einer Zielumgebung geeignet ist und eine Suspension von Teilchen zwischen 10 und 500 µm des Wirkstoffs und einer nicht-phytotoxischen, wachsartigen Substanz in einem wässrigen Lösungsmittel umfasst, das einen primären Stabilisator ausgewählt aus hydroxylischen und/oder ethoxylierten Polymeren enthält.

2. Zusammensetzung nach Anspruch 1, bei der der Wirkstoff aus Geruchsstoffen, abweisenden Mitteln, Pestiziden, Duftstoffen, Parfümen und anderen flüchtigen Verbindungen ausgewählt ist.

3. Zusammensetzung nach Anspruch 1 oder 2, bei der die nicht-phytotoxische, wachsartige Substanz einen Schmelzpunkt unterhalb von 150 °C und einen Siedepunkt oberhalb des Siedepunktes des Wirkstoffs aufweist.

4. Zusammensetzung nach einem der Ansprüche 1 bis 3, bei der die nicht-phytotoxische, wachsartige Substanz aus biologisch abbaubaren Wachsen, Fettsäuren, Fettsäureamiden, hydroxylischen Fettsäureestern, Fettalkoholen und Polyestern mit niedrigem Molekulargewicht ausgewählt ist.

5. Zusammensetzung nach einem der Ansprüche 1 bis 4, bei der der primäre Stabilisator Polyvinylalkohol umfasst.

6. Zusammensetzung nach einem der Ansprüche 1 bis 5, bei der die Dispersion ferner ein Bindemittel umfasst, vorzugsweise ein Polysaccharid oder eine polymere Säure.

7. Zusammensetzung nach einem der Ansprüche 1 bis 6, bei der die Dispersion ferner ein Antioxidans und/oder einen UV-Absorber umfasst.

8. Zusammensetzung nach einem der Ansprüche 1 bis 7, bei der der Wirkstoff in der nicht-phytotoxischen, wachsartigen Substanz in einer Konzentration zwischen 5 und 20 Gew.-% gelöst ist.

9. Zusammensetzung nach einem der Ansprüche 1 bis 8, die bei einer Temperatur von 25 °C mit Wasser mischbar ist.

10. Zusammensetzung nach einem der Ansprüche 1 bis 9, bei der die nicht-phytotoxische, wachsartige Substanz ein Wachs ist, das keine polaren Gruppen enthält, und die Zusammensetzung ferner einen polaren Emulgator umfasst, insbesondere ein Metallsalz einer wasserunlöslichen Fettsäure.

11. Verfahren zur Herstellung einer sprühbaren Zusammensetzung, die zur Freisetzung eines Wirkstoffs geeignet ist, bei dem
(a) ein wirksamer Bestandteil in einer nicht-phytotoxischen, wachsartigen Substanz gelöst wird, um eine Lösung zu erhalten,
(b) die in (a) erhaltene Lösung in einem wässrigen Lösungsmittel dispergiert wird, das einen primären Stabilisator ausgewählt aus hydroxylischen und/oder ethoxylierten Polymeren enthält, um eine Dispersion der Teilchen mit einer durchschnittlichen Teilchengröße von mindestens 10 µm zu erhalten,
(c) ein Bindemittel zugesetzt wird und gegebenenfalls die in (b) erhaltene Dispersion verdünnt wird.

12. Verfahren nach Anspruch 11, bei der der Dispersionsschritt (b) bei einer Temperatur oberhalb der Schmelztemperatur der nicht-phytotoxischen, wachsärtigen Substanz durchgeführt wird und der Zugabeschritt (c) bei einer Temperatur unterhalb von 30 °C durchgeführt wird.

13. Verfahren zur Kontrolle von Plageorganismen, bei dem eine Zusammensetzung gemäß einem der Ansprüche 1 bis 9 in die Umgebung des Plageorganismus versprüht wird.

## Revendications

1. Composition pulvérisable pouvant être diluée dans l'eau, adaptée pour libérer une substance active par vaporisation après pulvérisation de la composition dans un environnement cible, comportant une suspension de particules comprise entre 10 et 500 µm de la substance active et une substance paraffineuse non-phytotoxique dans un solvant aqueux contenant un agent stabilisant primaire sélectionné parmi des polymères hydroxyliques et/ou éthoxylés.

2. Composition selon la revendication 1, dans laquelle ladite substance active est sélectionnée parmi des composés semi-chimiques, des insectifuges, des pesticides, des fragrances, des parfums et autres composés volatils.

3. Composition selon la revendication 1 ou 2, dans laquelle ladite substance paraffineuse non-phytotoxique a un point de fusion inférieur à 150°C et un point d'ébullition supérieur au point d'ébullition de ladite substance active.

4. Composition selon l'une quelconque des revendications 1 à 3, dans laquelle ladite substance paraffineuse non-phytotoxique est sélectionnée parmi des cires biodégradables, des acides gras, des amides d'acides gras, des esters d'acides gras hydroxyliques, des alcools gras, et des polyesters de faible poids moléculaire.

5. Composition selon l'une quelconque des revendications 1 à 4, dans laquelle ledit agent stabilisant primaire comporte un alcool polyvinylique.

6. Composition selon l'une quelconque des revendications 1 à 5, dans laquelle ladite dispersion comporte de plus un liant, de préférence un polysaccharide ou un acide polymérique.

7. Composition selon l'une quelconque des revendications 1 à 6, dans laquelle ladite dispersion comporte de plus un antioxydant et/ou un absorbant de rayons UV.

8. Composition selon l'une quelconque des revendications 1 à 7, dans laquelle ladite substance active est dissoute dans ladite substance paraffineuse non-phytotoxique selon une concentration comprise entre 5 et 20 % en poids.

9. Composition selon l'une quelconque des revendications 1 à 8, qui est miscible à l'eau à une température de 25°C.

10. Composition selon l'une quelconque des revendications 1 à 9, dans laquelle ladite substance paraffineuse non-phytotoxique est une cire ne contenant aucun groupe polaire, et la composition comporte de plus un émulsifiant polaire, en particulier un sel métallique d'un acide gras insoluble dans l'eau.

11. Procédé pour produire une composition pulvérisable adaptée pour libérer une substance active, comportant les étapes consistant à :
(a) dissoudre un ingrédient actif dans une substance paraffineuse non-phytotoxique pour obtenir une solution,
(b) disperser la solution obtenue à l'étape (a) dans un solvant aqueux contenant un stabilisant primaire sélectionné parmi des polymères hydroxyliques et/ou éthoxylés pour obtenir une dispersion de particules ayant un taille moyenne de particule d'au moins 10 µm,
(c) ajouter un liant, et de manière facultative diluer la dispersion obtenue à l'étape (b).

12. Procédé selon la revendication 11, dans lequel l'étape de dispersion (b) est effectuée à une température au-dessus de la température de fusion de ladite substance paraffineuse non-phytotoxique, et ladite étape d'ajout (c) est effectuée à une température inférieure à 30°C.

13. Procédé pour commander des organismes pesteux, comportant la pulvérisation d'une composition selon l'une quelconque des revendications 1 à 9 dans l'environnement dudit organisme pesteux.
